# EUROPEAN PATENT SPECIFICATION

(11) **EP 2 080 895 B1**
(45) Date of publication and mention of the grant of the patent: **19.10.2011**
(21) Application number: 08000861.8
(22) Date of filing: 17.01.2008
(51) Int. Cl.: F02M 61/16

(54) **Thermal compensation arrangement and injection valve**
Thermische Kompensationsanordnung und Einspritzventil
Agencement de compensation thermique et soupape d'injection

(43) Date of publication of application: 22.07.2009
(73) Proprietor: Continental Automotive GmbH, 30165 Hannover (DE)
(72) Inventor: Bondi, Antonio, Dr., 53010 Rosia (Siena) (IT); Falaschi, Filippo, 56043 Fauglia (IT)

(56) References cited:
- EP-A- 1 803 929
- EP-A- 1 865 191
- WO-A-2004/085831

## Description

The invention relates to a thermal compensation arrangement and an injection valve.

Injection valves are in wide spread use, in particular for internal combustion engines where they may be arranged in order to dose the fluid into an intake manifold of the internal combustion engine or directly into the combustion chamber of a cylinder of the internal combustion engine.

Injection valves for an internal combustion engine comprise actuator units. In order to inject fuel, the actuator unit is energized so that a fluid flow through the fluid outlet portion of the injection valve is enabled.

In order to enhance the combustion process in view of the creation of unwanted emissions, the respective injection valve may be suited to dose fluids under very high pressures. The pressures may be in case of a gasoline engine, for example the range of up to 200 bar or in the case of diesel engines in the range of up to 2,000 bar. The injection of fluids under such high pressures has to be carried out very precisely.

Injection valves are calibrated dynamically at the end of the manufacturing process. The flow rate provided by such an injection valve during operation is calibrated by exerting a preload force on the actuator unit.

Document EP 1 803 929 A1 discloses a thermal compensation arrangement for a solid state actuator unit of a fuel injector, the retaining spring of the thermal compensation arrangement being adjustable via an internal ring body mechanically couple to an external ring.

The object of the invention is to create a thermal compensation arrangement and an injection valve that are simply to be manufactured and which facilitate a reliable and precise function of the injection valve.

These objects are achieved by the features of the independent claims. Advantageous embodiments of the invention are given in the sub-claims.

According to a first aspect the invention is distinguished by a thermal compensation arrangement comprising a housing including a central longitudinal axis, the housing comprising a cavity. The thermal compensation arrangement comprises a solid state actuator unit being arranged in the cavity and having a first axial end and a second axial end, and the second axial end acting as a drive side of the actuator unit. Furthermore, the thermal compensation arrangement comprises a thermal compensation unit being arranged in the cavity and being coupled to the first axial end of the actuator unit, an adjusting spring being designed to predetermine a temperature-related axial extension of the thermal compensation unit to hold the thermal compensation unit in abutment with the actuator unit, and an adjusting spring retaining element being designed to retain one free end of the adjusting spring. The thermal compensation arrangement comprises a force transmission element being arranged in a recess of the housing, being mechanically coupled to the adjusting spring retaining element and being designed to predetermine the position of the adjusting spring retaining element in the direction of the central longitudinal axis, the recess being inclined in a direction of a second axis relative to the central longitudinal axis in a way that the position of the force transmission element is adjustable in the direction of the second axis.

The adjusting spring has a first free axial end and a second free axial end which is coupled to the thermal compensation unit. The adjusting spring retaining element is designed and arranged to be coupled to the first free axial end of the adjusting spring.

This has the advantage that space in an axial direction above the thermal compensation arrangement can be kept free. Consequently, the thermal compensation arrangement and a fluid inlet arrangement can be positioned on a common axis. By this, a reduction of the volume of the injector is possible. Furthermore, a simple construction of the thermal compensation arrangement to exert an axial force on the adjusting spring retaining element and the adjusting spring with the force transmission element extending in radial direction can be obtained.

Preferably the recess is a cylindrical bore hole and the force transmission element is a cylindrical pin being in a press-fit connection with the recess. By this, a simple construction of the thermal compensation arrangement with the recess and the force transmission element is possible.

Preferably the force transmission element has an end section and the adjusting spring retaining element has a shoulder being in engagement with the end section. By this, a simple construction of the thermal compensation arrangement is possible.

According to a second aspect the invention is distinguished by an injection valve comprising the thermal compensation arrangement in accordance with the first aspect of the invention. This has the advantage that a calibration of the injection characteristic of the injection valve is possible by positioning the force transmission element in the direction of the second axis which is inclined relative to the central longitudinal axis.

Exemplary embodiments of the invention are explained in the following with the help of schematic drawings. These are as follows:
- Figure 1,: an injection valve in a longitudinal section view, and
- Figure 2,: a thermal compensation arrangement for the injec- tion valve according to figure 1 in a longitudinal section view.

Elements of the same design and function that appear in different illustrations are identified by the same reference characters.

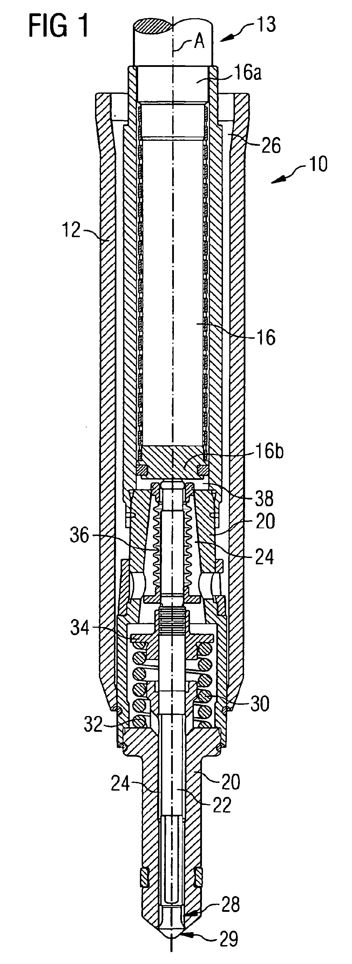

An injection valve 10 (figure 1) that is used as a fuel injection valve for an internal combustion engine comprises a thermal compensation arrangement 13 and a fluid inlet arrangement 18.

The thermal compensation arrangement 13 comprises a housing 12, a thermal compensation unit 14 and a solid state actuator unit 16 with a first axial end 16a and a second axial end 16b.

The housing 12 has a tubular shape. The solid state actuator unit 16 is inserted into the housing 12 and comprises a piezo actuator, which changes its axial length depending on a control signal applied to it.

The injection valve 10 comprises a valve body 20 with a central longitudinal axis A. The housing 12 has a cavity 24 which is axially led through the valve body 20. On one of the free ends of the cavity 24, a fluid outlet portion 28 is formed which is closed or open depending on the axial position of a valve needle 22. The injection valve 10 further has a fluid inlet portion 26 which is arranged in the fluid inlet arrangement 18 and which is hydraulically coupled to the cavity 24 and a not shown fuel connector. The fuel connector is designed to be connected to a high pressure fuel chamber of an internal combustion engine, the fuel is stored under high pressure, for example, under the pressure above 200 bar.

The valve body 20 has a valve body spring rest 32 and the valve needle 22 comprises a valve needle spring rest 34, both spring rests 32, 34 supporting a main spring 30 arranged between the valve body 20 and the valve needle 22.

The shown injection valve 10 is of an outward opening type. In an alternative embodiment of the injection valve 10 may be of an inward opening type. Between the valve needle 22 and the valve body 20 a bellow 36 is arranged which is sealingly coupling the valve body 20 with the valve needle 22. By this a fluid flow between the cavity 24 and a chamber 38 is prevented. Furthermore, the bellow 36 is formed and arranged in a way that the valve needle 22 is actuable by the actuator unit 16.

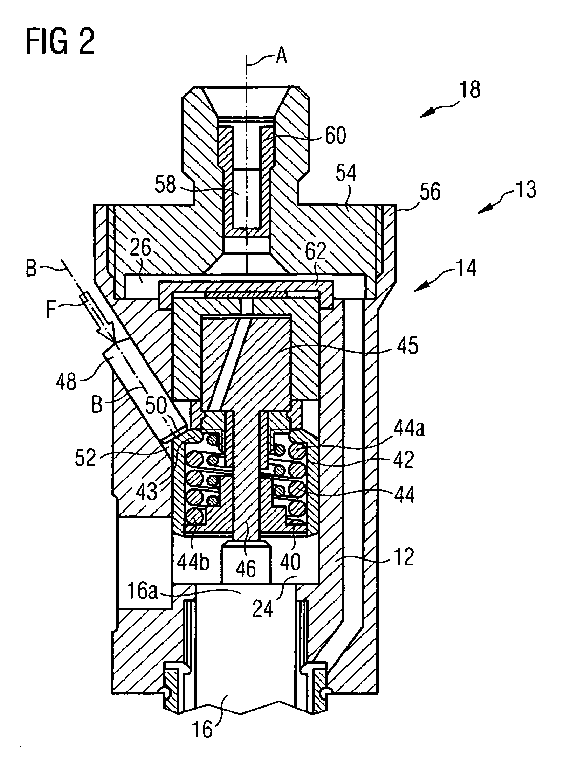

Figure 2 shows a sectional view of the thermal compensation arrangement 13 and the thermal compensation unit 14 which is arranged in the cavity 24 of the housing 12 of the injection valve 10 and which is coupled to the actuator unit 16 via the second axial end 16b of the actuator unit 16.

The thermal compensation arrangement 13 has the thermal compensation unit 14, an adjusting spring retaining element 42, and an adjusting spring 44.

The thermal compensation unit 14 has a spring seat 40 for the adjusting spring 44.

The adjusting spring retaining element 42 is mechanically coupled to the thermal compensation unit 14 and has a shoulder 43.

The adjusting spring 44 has a first free axial end 44a and a second free axial end 44b which is coupled to the thermal compensation unit 14. The adjusting spring 44 is arranged in the cavity 24 between the spring seat 40 of the thermal compensation unit 14 and the shoulder 43 of the adjusting spring retaining element 42. The spring seat 40 and the shoulder 43 are supporting the adjusting spring 44 arranged between the adjusting spring retaining element 42 and the thermal compensation unit 40.

The thermal compensation unit 40 has a main body 45 and a piston 46 which is extending in axial direction from the main body 45 and is coupled to the first axial end 16a of the actuator unit 16.

The housing 12 comprises a recess 52 which is formed as a cylindrical bore hole and which is extending in the direction of a second axis B which is inclined to the central longitudinal axis A. In the recess 52 a force transmission element 48 is arranged which is formed as a cylindrical pin. The force transmission element 48 is in a press-fit connection with the recess 52. The force transmission element 48 comprises an end section 50 which is coupled to the shoulder 43 of the adjusting spring retaining element 42.

The fluid inlet arrangement 18 comprises an inlet fitting body 54 which is arranged in an upper housing 56 which is part of the housing 12. The inlet fitting body 54 comprises an inlet fitting cavity 58 which is preferably formed as a bore hole and which is hydraulically coupled to the fluid inlet portion 26. Preferably, the inlet fitting cavity 58 comprises a filter 60 for filtering out particles which are transported with the fluid.

A cover 62 is arranged between the thermal compensation unit 40 and the fluid inlet portion 26. Preferably the cover 62 is welded to the housing 12 to enable a tight sealing of the thermal compensation unit 40 relative to the fluid inlet portion 26.

In the following, the function of the injection valve 10 will be described:
The fuel is led from the inlet fitting cavity 58 in the inlet fitting body 54 to the fluid inlet portion 26 in the housing 12 towards the valve body 20 and then towards the fluid outlet portion 28.

The valve needle 22 prevents a fluid flow through the fluid outlet portion 28 in the valve body 20 in a closing position of the valve needle 22. Outside of the closing position of the valve needle 22, the valve needle 22 enables the fluid flow through the fluid outlet portion 28.

In the case that the actuator unit 16 has a piezo electric actuator, the piezo electric actuator may change its axial length if it gets energized or de-energized. The second axial end 16b acts as a drive side of the actuator unit 16. By changing its length the actuator unit 16 may effect a force on the valve needle 22 via the second axial end 16b. Due to the elasticity of the bellow 36 the valve needle 22 is able to move in axial direction out of the closing position. Outside the closing position of the valve needle 22 there is a gap between the valve body 20 and the valve needle 22 at an axial end of the injection valve 10 facing away from the actuator unit 16. The gap forms a valve nozzle 29.

The main spring 30 can force the valve needle 22 via the valve needle spring rest 34 towards the actuator unit 16. In the case the actuator unit 16 is de-energized the actuator unit 16 shortens its length. Due to the elasticity of the bellow 36 the main spring 30 can force the valve needle 22 to move in axial direction its closing position. It is depending on the force balance between the force on the valve needle 22 caused by the actuator unit 16 and the force on the valve needle 22 caused by the main spring 30 whether the valve needle 22 is in its closing position or not.

In the following the function of the thermal compensation arrangement 13 will be described:
During the manufacturing process of the injection valve 10 a calibration process is carried out to adjust the fluid flow of the injection valve 10.

The injection valve 10 is coupled with a fluid supply to supply fluid to the fluid inlet portion 26. In the following the actuator unit 16 is actuated in the above described manner to release the fluid flow through the fluid outlet portion 28.

The fluid flow through the outlet portion 28 is to be determined.

To adjust the fluid flow through the fluid outlet portion 28 a force F is applied on the force transmission element 48 of the thermal compensation arrangement 13 to move the force transmission element 48 in the recess 52 of the housing 12 in direction of the second axis B. Due to the coupling between the end section 50 of the force transmission element 48 and the shoulder 43 of the adjusting spring retaining element 42 the movement of the force transmission element 48 in the direction of the second axis B is transmitted into a movement of the adjusting spring retaining element 42 in the direction of the central longitudinal axis A relative to the thermal compensation unit 14. By the movement of the adjusting spring retaining element 42 in direction of the central longitudinal axis A relative to the thermal compensation unit 14 the adjusting spring 44 is compressed. Thereby the piston 46 of the thermal compensation unit 14 comes into abutment with the actuator unit 16. By this the fluid flow through the fluid outlet portion 44 is adjustable until it reaches its temperature-related predetermined value.

Preferably, in the end of the calibration process the force transmission element 48 is in a fixed press-fit coupling with the recess 52 of the housing 12.

The arrangement of the recess 52 in the housing 12 lateral to the thermal compensation unit 14 has the advantage that the thermal compensation arrangement 13 and the fluid inlet arrangement 18 can be arranged on a common axis, in particular on the central longitudinal axis A. This enables to reduce the volume of the injection valve 10.

## Claims

1. Thermal compensation arrangement (13) comprising
- a housing (12) including a central longitudinal axis (A), the housing (12) comprising a cavity (24),
- a solid state actuator unit (16) being arranged in the cavity (24) and having a first axial end (16a) and a second axial end (16b), and the second axial end (16b) acting as a drive side of the actuator unit (16),
- a thermal compensation unit (14) being arranged in the cavity (24) and being coupled to the first axial end (16a) of the actuator unit (16),
- an adjusting spring (44) being designed to predetermine a temperature-related axial extension of the thermal compensation unit (14) to hold the thermal compensation unit (14) in abutment with the actuator unit (16),
- an adjusting spring retaining element (42) being designed to retain one free end of the adjusting spring (44),
- a force transmission element (48) being arranged in a recess (52) of the housing (12), being mechanically coupled to the adjusting spring retaining element (42) and being designed to predetermine the position of the adjusting spring retaining element (42) in the direction of the central longitudinal axis (A),
the recess (52) being inclined in a direction of a second axis (B) relative to the central longitudinal axis (A) **characterized in that** the position of the force transmission element (48) is adjustable in the direction of the second axis (B).

2. Thermal compensation arrangement (13) in accordance with claim 1, with the recess (52) being a cylindrical bore hole and the force transmission element (48) being a cylindrical pin being in a press-fit connection with the recess (52).

3. Thermal compensation arrangement (13) in accordance with claim 1 or 2, with the force transmission element (48) having an end section (50) and the adjusting spring retaining element (42) having a shoulder (43) being in engagement with the end section (50).

4. Injection valve (10) comprising the thermal compensation arrangement (13) in accordance with one of the preceding claims.

## Patentansprüche

1. Thermische Kompensationsanordnung (13) umfassend
• ein Gehäuse (12), beinhaltend eine mittige Längsachse (A), wobei das Gehäuse (12) einen Hohlraum (24) umfasst,
• eine Festkörper-Stellgliedeinheit (16), die in dem Hohlraum (24) angeordnet ist und eine erstes axiales Ende (16a) und ein zweites axiales Ende (16b) aufweist und wobei das zweite axiale Ende (16b) als eine Antriebsseite der Stellgliedeinheit (16) wirkt,
• eine thermische Kompensationseinheit (14), die in dem Hohlraum (24) angeordnet ist und mit dem ersten axialen Ende (16a) der Stellgliedeinheit (16) gekoppelt ist,
• eine Einstellfeder (44), die dazu konstruiert ist, eine temperaturbezogene axiale Ausdehnung der thermischen Kompensationseinheit (14) vorzubestimmen, um die thermische Kompensationseinheit (14) in Anlage mit der Stellgliedeinheit (16) zu halten,
• ein Einstellfeder-Halteelement (42), das dazu konstruiert ist, ein freies Ende der Einstellfeder (44) zu halten,
• ein Kraftübertragungselement (48), das in einer Ausnehmung des Gehäuses (12) angeordnet ist, mechanisch mit dem Einstellfeder-Halteelement (42) gekoppelt ist und dazu konstruiert ist, die Position des Einstellfeder-Halteelementes (42) in der Richtung der mittigen Längsachse (A) vorzubestimmen,
• wobei die Ausnehmung (52) in Bezug auf die mittige Längsachse (A) in der Richtung einer zweiten Achse (B) geneigt ist, **dadurch gekennzeichnet, dass** die Position des Kraftübertragungselementes (48) in der Richtung der zweiten Achse (B) einstellbar ist.

2. Thermische Kompensationsanordnung (13) gemäß Anspruch 1, wobei die Ausnehmung (52) ein zylindrisches Bohrloch ist und das Kraftübertragungselement (48) ein zylindrischer Stift in einer Presspassungsverbindung mit der Ausnehmung (52) ist.

3. Thermische Kompensationsanordnung (13) gemäß Anspruch 1 oder 2, wobei das Kraftübertragungselement (48) einen Endabschnitt (50) hat und das Einstellfeder-Halteelement (42) einen Absatz hat, der im Eingriff mit dem Endabschnitt (50) ist.

4. Einspritzventil (10), umfassend die thermische Kompensationsanordnung (13) gemäß einem der vorhergehenden Ansprüche.

## Revendications

1. Agencement de compensation thermique (13) comprenant :
- un logement (12) qui présente un axe longitudinal central (A), le logement (12) comprenant une cavité (24) ;
- une unité d'actionneur à semi-conducteur (16) disposée dans la cavité (24) et présentant une première extrémité axiale (16a) et une seconde extrémité axiale (16b), la seconde extrémité axiale (16b) agissant en tant que côté d'entraînement de l'unité d'actionneur (16) ;
- une unité de compensation thermique (14) disposée dans la cavité (24) et couplée à la première extrémité axiale (16a) de l'unité d'actionneur (16) ;
- un ressort de réglage (44) conçu de façon à prédéterminer une extension axiale liée à la température de l'unité de compensation thermique (14) de façon à maintenir l'unité de compensation thermique (14) en butée contre l'unité d'actionneur (16) ;
- un élément de retenue de ressort de réglage (42) conçu de façon à retenir une extrémité libre du ressort de réglage (44) ;
- un élément de transmission de force (48) disposé dans un évidement (52) du logement (12), couplé de manière mécanique à l'élément de retenue de ressort de réglage (42) et conçu de façon à prédéterminer la position de l'élément de retenue de ressort de réglage (42) dans la direction de l'axe longitudinal central (A) ;
l'évidement (52) étant incliné dans la direction d'un second axe (B) par rapport à l'axe longitudinal central (A), **caractérisé en ce que** la position de l'élément de transmission de force (48) peut être réglée dans la direction du second axe (B).

2. Agencement de compensation thermique (13) selon la revendication 1, l'évidement (52) étant un trou d'alésage cylindrique et l'élément de transmission de force (48) étant une broche cylindrique qui se trouve dans une relation de connexion avec ajustement avec serrage avec l'évidement (52).

3. Agencement de compensation thermique (13) selon la revendication 1 ou la revendication 2 , l'élément de transmission de force (48) présentant une section d'extrémité (50) et l'élément de retenue de ressort de réglage (42) présentant un épaulement (43) en prise avec la section d'extrémité (50).

4. Soupape d'injection (10) comprenant l'agencement de compensation thermique (13) selon l'une quelconque des revendications précédentes.
